# DEMANDE DE BREVET EUROPEEN

(11) **EP 1 787 858 A1**
(43) Date de publication de la demande: **23.05.2007**
(21) Numéro de dépôt: 06301158.9
(22) Date de dépôt: 21.11.2006
(51) Int. Cl.: B60N 2/66

(54) **Mécanisme de réglage lombaire pour le dossier d'un siège d'un véhicule automobile, et siège comportant un tel mécanisme de réglage**

(30) Priorité: 22.11.2005 FR 0553549
(71) Demandeur: Peugeot Citroen Automobiles SA, 78943 Vélizy-Villacoublay Cedex (FR)
(72) Inventeur: Dauphine, Jacques, 25400, ARBOUANS (FR)

(57) **Abrégé**

La présente invention concerne un mécanisme de réglage lombaire pour le dossier d'un siège d'un véhicule automobile, le dossier (1) comportant un châssis (2) et un support en nappe (3) suspendue dans un espace (E) dont le châssis (2) définit la périphérie, et le mécanisme de réglage comportant des moyens réglables (5) permettant de déplacer au moins une partie (6) du support en nappe (3) entre une position avant et une position arrière par rapport au châssis (2) du dossier. Les moyens réglables (5) comprennent un câble de commande (7), attaché sur la face arrière du support en nappe (3) de manière à être déplacé avec la partie déplaçable (6) du support en nappe (3), et un moyen de commande (8) solidaire de l'une (71) des deux extrémités (71, 72) du câble de commande (7) pour agir sur le câble de commande, l' autre extrémité (72) du câble de commande (7) étant montée fixe sur un premier côté (21) du châssis (2) du dossier et une partie (73) du câble de commande (7) située du côté du moyen de commande (8) étant montée mobile sur un deuxième côté (22), opposé au premier (21), du châssis (2) du dossier, la tension du câble de commande (7) réglée à l'aide du moyen de commande (8) déterminant la position de la partie déplaçable (6) du support en nappe (3).

## Description

L'invention concerne un mécanisme de réglage lombaire pour le dossier d'un siège d'un véhicule automobile ainsi qu'un siège d'un véhicule automobile comportant un tel mécanisme de réglage.

Pour augmenter le confort d'une personne assise sur un siège d'un véhicule automobile, notamment pour réduire la fatigue de cette personne, le dossier du siège doit être conformé pour supporter la région lombaire du dos de la personne occupant le siège. Toutefois, en raison des différences de tailles et de proportions des personnes, il est difficilement possible de réaliser un siège dont le dossier convienne à toute personne.

Pour permettre à une personne assise sur un siège d'un véhicule automobile d'adapter la forme du dossier au mieux à la physionomie de son dos, certains sièges de véhicule sont équipés d'un mécanisme réglable communément appelé support lombaire réglable. Mais les mécanismes de réglage utilisés à ce jour se limitent soit à un positionnement avant-arrière, à un positionnement haut-bas ou à des mécanismes modifiant uniquement la forme des bords latéraux du dossier du siège.

Les dispositifs de réglage lombaire utilisés jusqu'à maintenant sont logés dans un dossier de siège comportant un châssis et un support en nappe suspendu dans un espace dont le châssis définit la périphérie. Le châssis d'un siège est souvent constitué par un élément tubulaire en forme de U inversé. Entre les parties notamment droite et gauche du châssis est étendu, par exemple, une pluralité de câbles de liaison suspendant un corps élastique plan de façon à supporter la charge exercée par la personne occupant le siège.

Pour régler la forme du dossier dans la région lombaire de l'occupant du siège, différents types de mécanisme ont été utilisés jusqu'à maintenant. Ainsi, par exemple, un dispositif décrit dans le document FR-A-2 806 986 comporte deux mécanismes d'articulation formés par des ressorts de torsion. Moyennant un mécanisme de commande comportant un câble de commande relié aux deux ressorts, les ressorts de torsion sont sollicités en rotation pour mettre davantage en avant la partie lombaire du dossier du siège.

Un dispositif de réglage connu du document FR-A-2 616 640 comprend un ou plusieurs fils extensibles dont la tension est montée moyennant un mécanisme d'enroulement pour donner un support plus ferme dans la région lombaire.

Un autre dispositif, connu du document FR-A-2 743 271, comprend deux fils latéraux autour desquels sont enroulés des fils transversaux formant le support du dossier. Pour varier la forme du dossier, la cambrure des fils latéraux est varié moyennant deux blocs de fixation dont l'écartement est obtenu moyennant un mécanisme d'actionnement.

Le document FR-A-2 765 531 décrit un dispositif de réglage avec deux câbles transversaux reliés à un dispositif de commande destiné à agir soit sur l'un soit sur l'autre des deux câbles de manière à tendre l'un en relâchant l'autre et vice-versa.

Encore un autre dispositif de support réglable, décrit dans le document FR-A-2 432 402, comprend des tiges montées en rotation et reliées à des moyens de pression lombaire conformés pour varier la cambrure du dossier.

Ces mécanismes de support réglables se sont avérés désavantageux, soit par la quantité de moyens nécessaires, par exemple deux câbles et deux mécanismes dans le dispositif selon le document FR-A-2 806 986, soit par la suppression de toute souplesse de la nappe de dossier, comme par exemple dans le dispositif selon le document FR-A-2 616 640.

Le but de l'invention est de proposer un mécanisme de réglage lombaire qui présente, outre une structure simple, aussi l'avantage de conserver la souplesse du dossier.

Le but de l'invention est atteint avec un mécanisme de réglage lombaire pour le dossier d'un siège d'un véhicule automobile, le dossier comportant un châssis et un support en nappe suspendue dans un espace dont le châssis définit la périphérie, et le mécanisme de réglage comportant des moyens réglables permettant de déplacer au moins une partie du support en nappe entre une position avant et une position arrière par rapport au châssis du dossier.

Selon l'invention, les moyens réglables comprennent un câble de commande, attaché sur la face arrière du support en nappe de manière à être déplacé avec la partie déplaçable du support en nappe, et un moyen de commande solidaire de l'une des deux extrémités du câble de commande pour agir sur le câble de commande, l'autre extrémité du câble de commande étant montée fixe sur un premier côté du châssis du dossier et une partie du câble de commande située du côté du moyen de commande étant montée mobile sur un deuxième côté, opposé au premier, du châssis du dossier, la tension du câble de commande réglée à l'aide du moyen de commande déterminant la position de la partie déplaçable du support en nappe.

Le mécanisme de réglage de l'invention permet de déplacer le support en nappe, dans la zone lombaire, vers l'avant tout en conservant l'élasticité du support. De plus, ce mécanisme ne fait appel à aucun mécanisme complexe car c'est le câble de commande lui-même qui avance le support en nappe dans la région lombaire. Pour éviter que le câble de commande entre en contact avec le support en nappe, le câble est avantageusement, mais non nécessairement, maintenu en distance par rapport au support en nappe, par exemple, par une simple gaine, de préférence une gaine rigide, attachée au support en nappe de manière à être déplacée avec la partie déplaçable du support en nappe et conformée pour laisser un espace suffisant entre le support en nappe et le câble de commande.

Selon une variante de réalisation, le câble passe par des anneaux attachés à, et disposés dans une distance derrière, le support en nappe.

En positionnant l'accrochage du câble de commande dans des positions avancées par rapport au support en nappe, une variation de la tension du câble de commande fait repousser plus ou moins loin le support en nappe.

Avantageusement, le câble de commande est disposé dans un plan sensiblement horizontal afin de pouvoir obtenir le réglage de la cambrure du dossier du siège par un seul câble de commande.

D'autres caractéristiques et avantages de la présente invention ressortiront de la description ci-après d'un mode de réalisation du mécanisme de l'invention.

La description est faite en référence aux dessins dans lesquels :
la figure 1 montre les éléments du dispositif de l'invention suivant une coupe transversale du dossier d'un siège,
la figure 2 montre la disposition du mécanisme dans une vue latérale, partiellement en coupe,
la figure 3 montre la partie lombaire d'un dossier de siège dans une vue en perspective, et
les figures 4A et 4B montrent le dossier d'un siège équipé d'un mécanisme de l'invention dans la partie lombaire du siège.

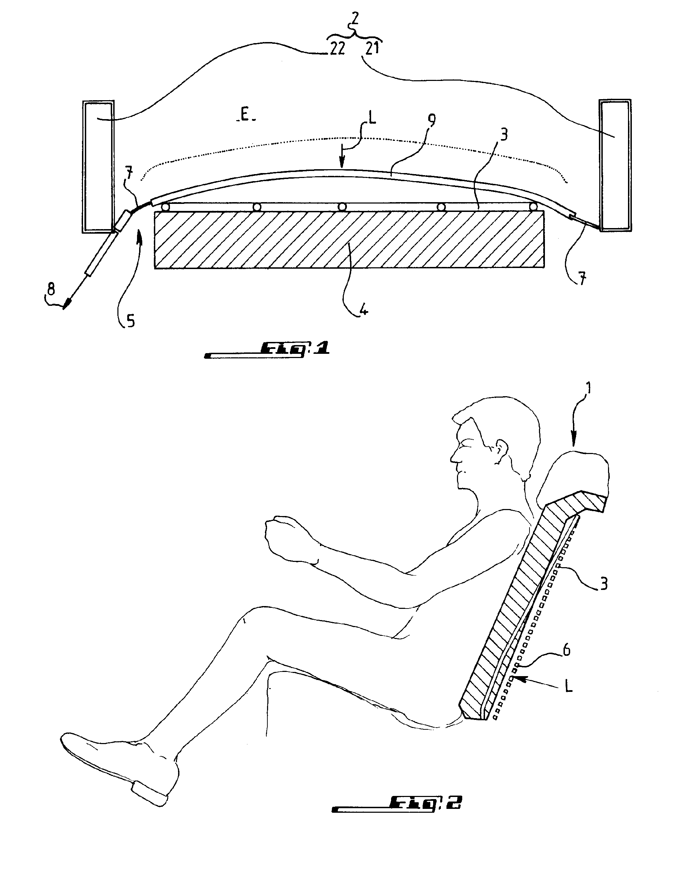

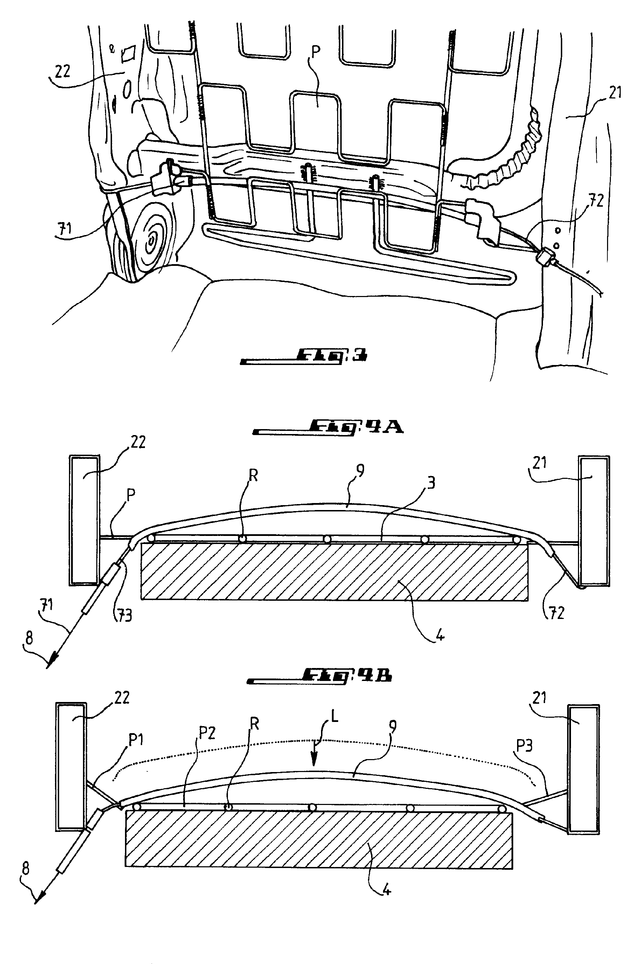

Le mécanisme de réglage lombaire de l'invention s'applique à un siège d'un véhicule automobile ayant un dossier 1 comportant un châssis 2 et un support en nappe 3 pour une matelassure 4 du dossier. Le support en nappe 3 est suspendu dans un espace E dont le châssis 2 définit la périphérie. Afin d'obtenir une réalisation de la cambrure du dossier et notamment un support plus ou moins ferme dans une région du dossier correspondant à la partie lombaire du dos d'un utilisateur du siège, le mécanisme de réglage comporte des moyens réglables 5 permettant de déplacer au moins une partie 6 du support en nappe 3 entre une position avant et une position arrière par rapport au châssis 2 du dossier. Le déplacement de la partie 6 du support en nappe 3 est effectué suivant une direction L comme le montrent les figures 1 et 2.

Les moyens réglables 5 comprennent un câble de commande 7 attaché sur la face arrière du support en nappe 3 de manière à être déplacé avec la partie déplaçable 6 du support en nappe 3. Les moyens réglables 5 comprennent en outre un moyen de commande 8 solidaire de l'une des deux extrémités du câble de commande 7 pour agir sur le câble de commande.

Comme le montre la figure 3, l'une des deux extrémités du câble de commande 7, référencée 71, est attachée à un moyen de commande 8 tel un levier ou une roue permettant de tirer plus ou moins fortement sur le câble de commande. L'autre extrémité du câble de commande 7, référencée 72, est montée fixe sur un premier côté 21 du châssis 2 du dossier. Une partie 73 du câble de commande 7 est située du côté du moyen de commande 8 et montée mobile sur un deuxième côté 22 du châssis 2, qui est opposé au premier côté 21 du châssis 2. Le câble de commande 7 s'étend ainsi entre le premier côté 21 et le deuxième côté 22 du châssis 2 du dossier.

Grâce à cette disposition de l'invention, la tension du câble de commande 7, qui est réglée à l'aide du moyen de commande 8, détermine la position de la partie déplaçable 6 du support en nappe 3. Plus particulièrement, la partie déplaçable 6 du support en nappe 3 est avancée davantage vers l'avant ou relâchée vers l'arrière du dossier du siège. Ceci est obtenu par le fait que le câble de commande 7 est accroché au châssis 2 du dossier en avant du support en nappe 3.

Comme le montre la superposition des figures 4A et 4B, les moyens réglables 5 comprennent une gaine 9, de préférence une gaine rigide 9, attachée au support en nappe 3 du dossier de manière à être déplacée avec la partie déplaçable 6 du support en nappe 3. A cet effet, le câble de commande 7 passe par la gaine 9 attachée au support en nappe 3 de manière à laisser un espace suffisant entre le support en nappe 3 et le câble de commande 7, quelle que soit la position du support en nappe 3 dans la section lombaire du dossier, pour conserver au support en nappe 3 en même temps l'élasticité nécessaire au confort de l'utilisateur du siège. Les figures 1 et 4A, 4B montrent plus particulièrement à ce sujet que l'espace nécessaire entre le support en nappe 3 et la gaine 9 est obtenu en donnant à la gaine 9 la forme d'un arc.

Il va sans dire que, sans sortir du principe de la présente invention, il est également concevable de relier le câble de commande 7 au support en nappe 3 par des supports individuels montés sur les ressorts R ayant des longueurs variables afin d'obtenir cette disposition en arc, du tronçon de câble de commande 7 disposé derrière la partie déplaçable 6 du support en nappe 3.

La superposition des figures 4A et 4B montre particulièrement bien que, en montant le câble de commande 7 en avant du support en nappe 3, on obtient l'avancement du support en nappe 3 suivant la direction L en tirant sur le câble 7 moyennant le moyen de commande 8, ce qui correspond à un raccourcissement du tronçon du câble de commande 7 situé strictement derrière le support en nappe 3.

La superposition des figures 4A et 4B montre par ailleurs aussi que, lorsque l'on tire sur le câble de commande 7, le support en nappe 3, qui s'étend initialement dans un plan référencé sur la figure 4A par la lettre P, est déformé dans la région lombaire du dossier du siège pour s'étendre suivant trois plans différents référencés sur la figure 4B respectivement par P1, P2 et P3.

## Revendications

1. Mécanisme de réglage lombaire pour le dossier d'un siège d'un véhicule automobile, le dossier (1) comportant un châssis (2) et un support en nappe (3) suspendue dans un espace (E) dont le châssis (2) définit la périphérie, et le mécanisme de réglage comportant des moyens réglables (5) permettant de déplacer au moins une partie (6) du support en nappe (3) entre une position avant et une position arrière par rapport au châssis (2) du dossier,
**caractérisé en ce que** les moyens réglables (5) comprennent un câble de commande (7), attaché sur la face arrière du support en nappe (3) de manière à être déplacé avec la partie déplaçable (6) du support en nappe (3), et un moyen de commande (8) solidaire de l'une (71) des deux extrémités (71, 72) du câble de commande (7) pour agir sur le câble de commande, l'autre extrémité (72) du câble de commande (7) étant montée fixe sur un premier côté (21) du châssis (2) du dossier et une partie (73) du câble de commande (7) située du côté du moyen de commande (8) étant montée mobile sur un deuxième côté (22), opposé au premier (21), du châssis (2) du dossier, la tension du câble de commande (7) réglée à l'aide du moyen de commande (8) déterminant la position de la partie déplaçable (6) du support en nappe (3).

2. Mécanisme de réglage selon la revendication 1,
**caractérisé en ce que** les moyens réglables (5) comprennent une gaine (9) attachée au support en nappe (3) de manière à être déplacée avec la partie déplaçable (6) du support en nappe (3), le câble de commande (7) passant par la gaine (9).

3. Mécanisme de réglage selon la revendication 1 ou 2, **caractérisé en ce que** les moyens réglables (5) comprennent une gaine rigide (9) attachée au support en nappe (3) de manière à être déplacée avec la partie déplaçable (6) du support en nappe (3) et conformée pour laisser un espace suffisant entre le support en nappe (3) et le câble de commande (7).

4. Mécanisme de réglage selon l'une quelconque des revendications 1 à 3, **caractérisé en ce que** le câble de commande (7) est disposée dans un plan sensiblement horizontal et **en ce qu'**il est accroché au châssis (2) du dossier en avant du support en nappe (3).

5. Siège pour un véhicule automobile, **caractérisé en ce qu'**il comprend un mécanisme de réglage selon l'une quelconque des revendications 1 à 4.

6. Véhicule automobile, **caractérisé en ce qu'**il comprend un siège ayant un mécanisme de réglage selon l'une quelconque des revendications 1 à 4.
